Europäisches Patentamt

(19) European Patent Office

Office européen des brevets

(11) Publication number: **0 309 004 B1**

# EUROPEAN PATENT SPECIFICATION

(45) Date of publication of patent specification:
23.10.91 Bulletin 91/43

(51) Int. Cl.⁵: **B60S 3/06**

(21) Application number: **88118500.3**

(22) Date of filing: **07.11.88**

---

(54) **Process and moving-gate system for washing motor vehicles.**

---

(30) Priority: **18.05.88 IT 2062088**

(43) Date of publication of application:
**29.03.89 Bulletin 89/13**

(45) Publication of the grant of the patent:
**23.10.91 Bulletin 91/43**

(84) Designated Contracting States:
**BE CH DE ES FR GB LI NL SE**

(56) References cited:
**FR-A- 2 021 799**
**GB-A- 1 001 868**
**US-A- 3 339 563**
**PATENT ABSTRACTS OF JAPAN, vol. 7, no. 55**
**(M-198)[1200], 5th March 1983; & JP-A-57 201**
**746 (DAIFUKU KIKO K.K.) 10-12-1982**

(73) Proprietor: **CECCATO & C. S.P.A.**
**Via Battaglia 1**
**I-36041 Alte Ceccato di Montecchio Maggiore**
**(Vicenza) (IT)**

(72) Inventor: **Voutchinitch, Pavle**
**Via Della Piazza Vecchia 2**
**Montecchio Maggiore Vicenza (IT)**

(74) Representative: **Rapisardi, Mariacristina, Dr.**
**Proc.**
**STUDIO TECNICO LEGALE RAPISARDI Largo**
**V Alpini 15**
**I-20145 Milano (IT)**

## Description

The present invention relates to a process and to a moving-gate system for washing motor vehicles.

As is known, in motor vehicle washing systems and in particular in so-called moving-gate washing systems, foaming products with characteristics similar to shampoo are currently used as cleaning agents instead of conventional detergents.

Foam can in fact be distributed on a motor vehicle more uniformly than a conventional detergent, and it furthermore adheres to the vehicle's sides and vertical surfaces, while conventional detergent tends to slip off, thus not providing the required cleaning effect on these surfaces and producing no lubrication between the brushes and the bodywork.

As is known, foam or shampoo, like granular detergents, furthermore performs an optimum cleaning action in a well-determined time interval, mostly according to its physical and chemical characteristics and to the environmental temperature at which it is used. In known so-called moving-gate washing systems, since the foam distributing means are normally associated on the same gate which supports the brushes, when a vehicle is washed the foam distributed on said vehicle is removed before it performs its optimum cleaning action, and for this reason the foam is delivered in excess, thus considerably polluting the drainwater of the system.

In order to at least partially solve these disadvantages, some systems, before washing a vehicle with their brushes, have a fixed arc adapted to deliver shampoo or foam onto the motor vehicle or, in the absence of the fixed arc, the single moving gate which supports the brushes and is simultaneously equipped with foam distribution nozzles performs two strokes, during the first of which only foam is distributed, while the second stroke is idle or washes the motor vehicle with the brushes.

In these cases, however, due to the time interval elapsed between the distribution of the foam on the motor vehicle and its washing, the shampoo or foam tends to dry on the bodywork, both due to the possibly high environmental temperature in the presence of the sun and to the heat released by the motor hood.

As a solution to these disadvantages, in some cases the moving gate performs a first stroke, during which only foam is distributed onto the vehicle, and a second stroke during which the washing brushes are activated while further foam is distributed.

In this manner, though the above mentioned disadvantages are avoided, a considerable amount of foam is wasted and the time required to wash a vehicle is increased considerably to the detriment of the number of motor vehicles washed in an hour. FR-A-2021799 discloses a process for washing motor vehicles with a moving gate system as defined in the pre-characterizing part of claim 1. The first gate of said moving gate system has only drying means and does not have means for delivering foam detergent substances so that it cannot deliver, in a first stroke, detergent substances onto the vehicle to be washed.

In this situation, the technical aim of the present invention is to eliminate the disadvantages described above in the known art.

Within this aim, an important object of the present invention is to provide a process and a moving-gate system for washing motor vehicles, both of which can comply with the optimum times required for the cleaning action of the foam without uselessly wasting any of said foam.

Another important object of the present invention is to provide a process and a moving-gate system for washing motor vehicles which has an extremely high washing capacity in terms of motor vehicles per hour.

Not least object of the present invention is to provide a process and a moving-gate system for washing motor vehicles which, if the time required to wash a motor vehicle is equal with respect to conventional systems, can be integrated with a supplementary number of additional operations.

The abovementioned technical aim and the specified objects are substantially achieved by a process for washing motor vehicles with a moving-gate system, as defined in the characterizing part of claim 1.

This process is executed by a moving-gate system for washing motor vehicles, as claimed in claim 3.

Further characteristics and advantages of the invention will become apparent from the description of a preferred but not exclusive embodiment of a process and of a moving-gate system for washing motor vehicles, according to the invention, illustrated only by way of non-limitative example in the accompanying drawings, wherein :

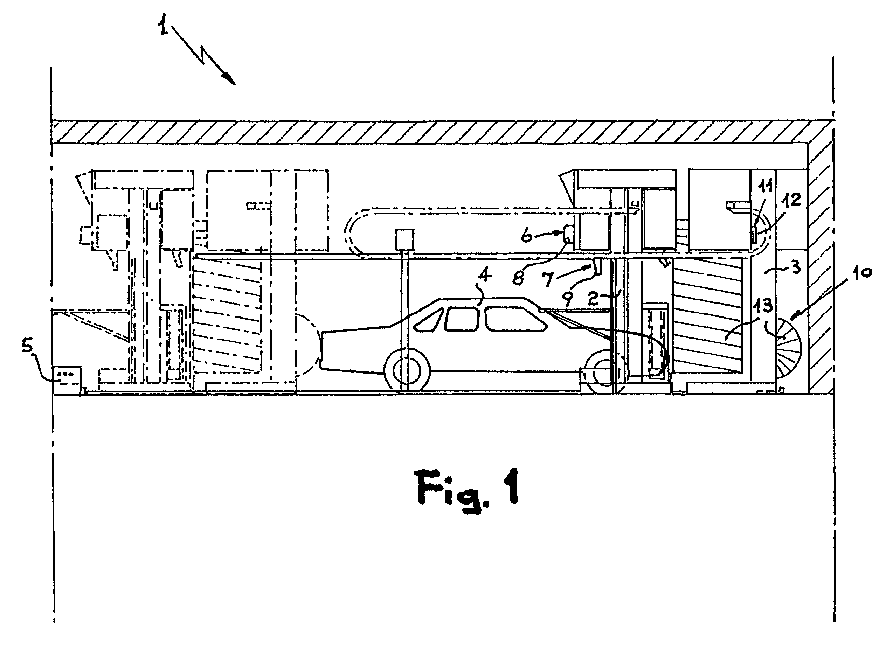

figure 1 is a schematic lateral elevation view of the moving-gate washing system according to the invention ; and

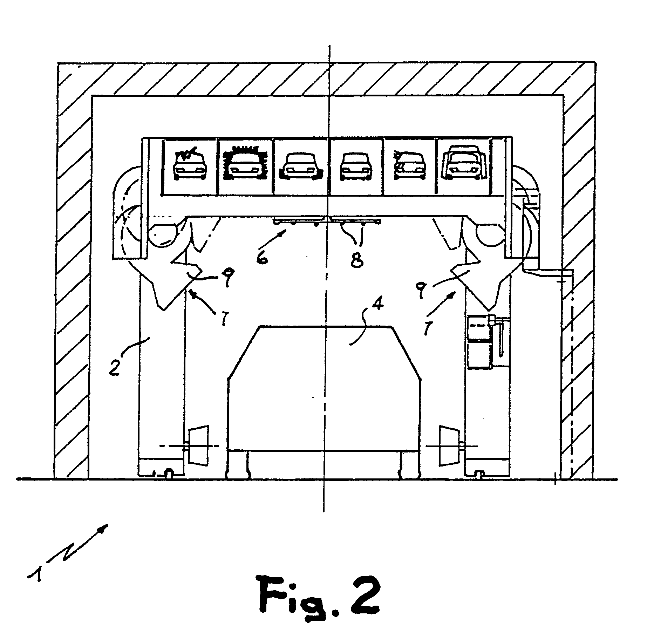

figure 2 is a front elevation view of the moving-gate washing system illustrated in figure 1 according to the invention.

With particular reference to the above described figures, the process according to the invention is executed according to the following succession of steps.

The motor vehicle to be washed is initially placed in a preset region of the moving-gate washing system.

In a subsequent step, a first gate is moved along the vehicle to deliver foamy detergent substances onto it and, according to the chemical and physical characteristics of said substances and to the temperature of the environment and of the vehicle, a second gate is moved to wash said vehicle with brushes after a preset time interval.

The time interval between the starting motion of the first gate and that of the second one is advantageously shorter than, or equal to, the time interval required by the first gate to complete the distribution of the foamy detergent substances on all the surfaces of the vehicle, comprising its front and rear ends.

After this last step, the first gate is deactivated for the time required by the second portal to complete its first advancement stroke along the vehicle, washing it with its brushes.

Then the second gate performs a return stroke, during which a further washing is performed with the brushes, and additional fluids, such as e.g. waxing products or products for air-drying the vehicle or other products, are applied to said vehicle.

In a preferred solution, during said second return stroke of the second gate the first gate moves, too, and dries the vehicle after a time interval shorter than, or equal to, the time interval required by the second gate e.g. to wax the motor vehicle.

This solution is furthermore useful since the drying agent has a time in which it acts optimally, and this time is ensured by delivering the product with the second gate and by successively drying with the second gate.

Since the time required to perform a complete washing of the entire vehicle is considerably shorter than the time required by a conventional moving-gate system due to the above described factors, it is possible, if required, to make the first gate perform a third advancement stroke and a fourth return stroke to dry the vehicle perfectly, while the second gate is kept deactivated.

The above described process is executed with a moving-gate system for washing motor vehicles to which the present invention patent also relates.

The system, generally indicated by the reference numeral 1, comprises a first gate and a second gate, respectively indicated by the reference numerals 2 and 3, which move in succession to completely wash a vehicle 4.

The system conveniently comprises means 5 to selectively activate or deactivate the first gate and the second gate 2 and 3 at least in an initial or final step of the washing of the vehicle 4.

At least one gate, and more precisely the first gate 2, comprises means for delivering foamy detergent substances, generally indicated by the reference numeral 6, and vehicle drying means, generally indicated by the reference numeral 7.

More in detail, the delivery means 6 comprise, in a per se known manner, a plurality of nozzles 8 for distributing the detergent substances, while the drying means 7 comprise a plurality of outlets 9 adapted to deliver a jet of pressurized air at an optimum distance from the contour of the vehicle.

The second gate 3 has mechanical means for washing the vehicle and means for delivering auxiliary fluids onto said vehicle ; said means are respectively generally indicated by the reference numerals 10 and 11.

More precisely, the mechanical means 10 have a plurality of brushes 13 which are rotatable about their own axes and are arranged in a per se known manner on the gate, while the auxiliary fluid delivery means 11 can have, in a preferred solution, nozzles for delivering waxy substances 12 or alternately outlets for delivering air or any further fluid delivery device, according to the requirements and to the operations to be performed.

The operation of the system according to the present invention is the following.

After placing a vehicle 4 in a preset region of the system, the first gate is activated and it distributes the detergent foam on said vehicle during its first advancement stroke.

According to the chemical-physical characteristics of the foam and to the temperature of the environment and of the vehicle, after a preset time interval the second gate 3 is also activated so that the two gates 2 and 3 substantially move one after the other along the vehicle and wash it.

Once the first advancement stroke has ended, a second return stroke is performed, during which the second gate 3 waxes the vehicle and is followed at a distance by the first gate which dries said vehicle, thus preventing any drops which may fall from the brushes of the second gate, as normally occurs in known systems, from again wetting the vehicle.

If required, once the second return stroke of the first gate and of the second gate is complete, it is possible to make the first gate perform a third stroke and a fourth stroke to perfectly dry the vehicle ; this operation is usually completed manually in conventional systems.

The invention achieves the proposed aim and objects and achieves important and numerous advantages.

A new process for washing motor vehicles with a moving-gate system has in fact been provided, allowing to wash a large number of motor vehicles per hour without wasting detergent and waxing substances and using both optimally.

The invention thus conceived is susceptible to numerous modifications and variations, all of which are within the scope of the inventive concept ; furthermore, all the details may be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for washing motor vehicles with a moving gate system comprising the following steps of : placing the motor vehicle (4), to be washed, in a pre-set position in front of a first gate (2) and at least one second gate (3), activating said first gate (2) to perform a first advancement stroke along said vehicle and activating said second gate (3) to follow said first gate after a pre-set time interval such that said second gate (3) follows said first gate (2) at a pre-established distance, characterized in that : said first stroke comprises an initial step in which said first gate is activated and begins to deliver detergent substances when it meets said vehicle and said second gate begins to follow said first gate at a pre-established distance corresponding to a time interval necessary to make said detergent substances act in a optimum manner on the surface of said vehicle, an intermediate step in which said first gate delivers said detergent substances onto said vehicle and said second gate, following said first gate at said pre-established distance, mechanically washes said vehicle and a final step in which the delivery of said detergent substances form said first gate is interrupted when the first gate has passed over said vehicle, said first gate being deactivated while said second gate is completing said first stroke.

2. Process according to claim 1, characterized in that said distance and said time interval are variable according to the chemical-physical characteristics of said detergent substances and to the temperature of the environment and of said vehicle.

3. Moving-gate system for washing motor vehicles comprising : one first gate and at least one second gate (2, 3), and means (5) to selectively activate or deactivate the first gate (2) and the second gate (3) according to the process steps of claim 1, said first gate having means (7) for drying said vehicle, whereby at least said first gate comprises means (6), for delivering foamy detergent substances, and said second gate comprises means (10) for mechanically washing the vehicle.

## Patentansprüche

1. Verfahren zum Waschen von Kraftfahrzeugen mit einem sich bewegenden Portalsystem, das folgende Schritte enthält : Das zu waschende Kraftfahrzeug (4) wird in eine vorgegebene Position vor ein erstes Portal (2) und mindestens ein zweites Portal (3) gestellt, das erste Portal (2) wird zum Ausführen eines ersten Vorwärtshubes dem Fahrzeug entlang aktiviert und das zweite Portal (3) wird zum Folgen des ersten Portals nach einem vorgegebenen Zeitintervall aktiviert, so daß das zweite Portal (3) dem ersten Portal (2) in einem voreingestellten Abstand folgt, dadurch gekennzeichnet, daß der erste Hub einen anfänglichen Schritt, in dem das erste Portal aktiviert wird und, wenn es das Fahrzeug trifft, Reinigungssubstanzen abzugeben beginnt und das zweite Portal dem ersten Portal in einem voreingestellten Abstand, der einem für das optimale Einwirken der Reinigungssubstanzen auf die Oberfläche des Fahrzeugs erforderlichen Zeitintervall entspricht, zu folgen beginnt, einen Zwischenschritt, in dem das erste Portal die Reinigungssubstanzen auf das Fahrzeug abgibt und das dem ersten Portal in voreingestelltem Abstand folgende zweite Portal das Fahrzeug mechanisch wäscht, und einen Endabschnitt enthält, in dem die Abgabe der Reinigungssubstanzen von dem ersten Portal unterbrochen wird, wenn das erste Portal über das Fahrzeug gefahren ist, wobei das erste Portal die aktiviert wird, während das zweite Portal den ersten Hub vollends ausführt.

2. Verfahren nach Anspruch 1, dadurch gekennzeichnet, daß der Abstand und das Zeitintervall den chemisch-physikalischen Eigenschaften der Reinigungssubstanzen und der Temperatur der Umgebung und des Fahrzeugs entsprechend variabel sind.

3. Sich bewegendes Portalsystem zum Waschen von Kraftfahrzeugen, das ein erstes Portal und mindestens ein zweites Portal (2, 3) sowie Mittel (5) zum selektiven Aktivieren oder Deaktivieren des ersten Portals (2) und des zweiten Portals (3) gemäß den Verfahrensschritten des Anspruchs 1 enthält, wobei das erste Portal Mittel (7) zum Trocknen des Fahrzeugs, mindestens das erste Portal Mittel (6) zur Abgabe von schaumförmigen Reinigungssubstanzen und das zweite Portal Mittel (10) zum mechanischen Waschen des Fahrzeugs enthält.

## Revendications

1. Procédé pour laver des véhicules à moteur avec un dispositif de portiques mobiles, comprenant les étapes suivantes consistant à : placer le véhicule à moteur (4) à laver dans une position prédéterminée en face d'un premier portique (2) et d'au moins un second portique (3), mettre en marche le premier portique (2) pour effectuer une première course d'avancement le long du véhicule, et mettre en marche le second portique (3) pour qu'il suive le premier portique au bout d'un intervalle de temps prédéterminé, de façon que ce second portique (3) suive le premier portique (2) à une distance préétablie, procédé caractérisé en ce que la première course comprend une étape initiale dans laquelle le premier portique est activé et commence à distribuer des substances détergentes lorsqu'il rencontre le véhicule, tandis que le second portique commence à suivre le premier portique à une distance préétablie correspondant à un intervalle de temps nécessaire pour que les substances détergentes agissent de manière optimale sur la surface du véhicule, une étape intermédiaire dans laquelle le premier portique distribue les substances détergentes sur le véhicule, tandis que le second portique, suivant le premier portique à la distance préétablie, lave mécaniquement le véhicule, et une étape finale dans laquelle la distribution des substances détergentes par le premier portique est coupée lorsque ce premier portique est complètement passé sur le véhicule, le fonctionnement du premier portique étant alors coupé pendant que le second portique termine cette première course.

2. Procédé selon la revendication 1, caractérisé en ce que la distance et l'intervalle de temps sont variables suivant les caractéristiques physico-chimiques des substances détergentes, suivant la température ambiante et suivant le véhicule.

3. Système de portiques mobiles pour laver des véhicules à moteur, comprenant : un premier portique et au moins un second portique (2, 3), ainsi que des moyens (5) pour mettre en marche et couper sélectivement le fonctionnement du premier portique (2) et du second portique (3) conformément aux étapes du procédé selon la revendication 1, système caractérisé en ce que le premier portique comporte des moyens (7) pour sécher le véhicule, de façon que ce premier portique au moins comprenne des moyens (6) pour distribuer des substances détergentes en mousse, et en ce que le second portique comprend des moyens (10) pour laver mécaniquement le véhicule.

Fig. 1

EP 0 309 004 B1

Fig. 2